(19) Europäisches Patentamt

European Patent Office

Office européen des brevets

(11) **EP 1 612 919 A2**

(12) **EUROPÄISCHE PATENTANMELDUNG**

(43) Veröffentlichungstag:
**04.01.2006 Patentblatt 2006/01**

(51) Int Cl.:
*H02K 21/22* *(2006.01)*

(21) Anmeldenummer: **05010054.4**

(22) Anmeldetag: **09.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **24.06.2004 CZ 20040758**

(71) Anmelder: **Konfrst, Vaclav**
**272 01 Kladno (CZ)**

(72) Erfinder: **Konfrst, Vaclav**
**272 01 Kladno (CZ)**

(74) Vertreter: **Läufer, Martina et al**
**Gramm, Lins & Partner GbR**
**Freundallee 13**
**30173 Hannover (DE)**

(54) **Elektrische Rotationsmaschine und deren Verwendung**

(57)    Die elektrische Rotationsmaschine ermöglicht die Herstellung leichter, langsam laufender Räder mit integriertem elektrischen Antrieb, auch bei Durchmessern von Über 50 cm. Auf dem Rotor (1; 7; 10) der Maschine sind ringförmig Permanentmagneten (2) platziert, auf dem Stator (3; 8; 11) Spulen (4) mit einem Kern aus weichem magnetischen Material. Die Permanentmagnete (2) befinden sich auf der inneren zylindrischen Oberfläche eines einen Teil des Rotors bildenden ringförmigen Trägers (1), und die Stator-Spulen (4) auf Ringsegmenten aus magnetisch weichem Material (3) mit geringerem Radius konzentrisch zum Träger (1), die zugleich den Spulenkern bilden und so angeordnet sind, dass der Rotor reibungsfrei um den Stator umlaufen kann. Die voneinander beabstandeten Stator-Ringsegmente (3) werden durch Abstimmung der Anzahl und Anordnung der Permanentmagnete (2) auf die Anzahl und Anordnung der Spulen (4) bei Betrieb im Bereich ihrer Pole (15) magnetisch und elektrisch neutral gehalten, so dass Flip-Flop-Effekte und dadurch bedingte Vibrationen (18) ausgeschlossen werden.

fig. 3

**Beschreibung**

Die Erfindung betrifft eine elektrische Rotationsmaschine, konkret eine permanenterregte Synchronmaschine, und deren Verwendung als Motor, insbesondere in Fahrzeugen, oder als Generator, z.B. für Wind- oder Wasserkraft. Bei Ausbildung als Motor kann durch die Erfindung ein leichter, langsam laufender mehrpoliger Elektromotor verifiziert werden, der z. B. für den Antrieb zusammenklappbarer Rollstühle für Körperbehinderte geeignet ist.

Stand der Technik:

Bekannte langsam laufende elektrische Antriebseinheiten mit einer Nenndrehzahl von ca. 1mal pro Sekunde, deren Drehmoment an der Antriebswelle in der Größenordnung von 100 Nm liegt, wurden klassisch mit schnell laufendem Standardelektroantrieb und Getriebe konstruiert. Diese Konstruktionsweise führt zu hoher Störanfälligkeit.

Für verschiedene Anwendungszwecke besteht ein Bedarf an getriebelosen, kontaktlosen und während der ganzen Lebensdauer wartungslosen Elektromotoren.

Aus CZ 1480-97 A3, Anmelder Wavre Nicolas, CH, ist ein klassischer Synchronmotor mit permanenten Magneten bekannt, bei dem die Spulen auf den Zähnen eines Zahnkopfkamms jeweils mit der Achse zur Motormitte angesteckt und mit einem Bügel verbunden sind. Hierdurch werden jedoch die erforderlichen Gewicht- und Leistungsparameter nicht erreicht. Eine entsprechende Anordnung ist auch aus JP 55122465 A bekannt, die jedoch nur als Generator geeignet ist.

Für die Konstruktion eines leichten Motors mit großem Durchmesser ist auch das Patent CZ 279 581 B6 (Anmelder Ustav termotechniky AVCR Prag, CZ) nicht geeignet. Darin wird eine Maschine mit einem Durchmesser über einem Meter offenbart, bei der zwei Maschinenrotoren vorhanden sind, einer mit Magneten und der andere mit Paaren von Polschuhen, auf denen Spulen angesteckt sind. Es ist offensichtlich, dass diese Maschine nur als eine Quelle (Generator) nicht jedoch als Antrieb genutzt werden kann, da anderenfalls durch einen unkompensierten Flip-Flop-Effekt Vibrationen entstehen.

Aus CZ 291897 B6 ist bereits ein getriebeloser Elektromotor bekannt, bei dem auf dem Rotor FeNdB-Magnete und auf einem durchgehenden inneren Kreisring aus einem magnetisch weichen Material, z.B. Ferrit, aufgewickelte Statorspulen vorhanden sind.

Motoren nach diesem Prinzip können technisch nur bis zu einem Durchmesser von ca. 300 mm realisiert werden, da darüber zu vernünftigen Kosten nicht genügend präzise Ringe aus magnetisch weichem Material hergestellt werden können, insbesondere nicht mit Durchmessern über 500 mm, einer Breite von mehreren cm, einem Anzugsmoment in der Größenordnung von 100 Nm und dem Verhältnis Motordurchmesser zu Motordicke über 15.

Die Verwirklichung einer niedrigen Nennzahl und eines hohen Moments erfordert einen weichen Betrieb.

Der Erfindung liegt daher die Aufgabe zugrunde, eine leichte, auch getriebelos langsam laufende, weitestgehend wartungsfreie elektrische Rotationsmaschine zu entwickeln, die die Nachteile im Stande der Technik überwindet.

Zusammenfassung der Erfindung:

Zur Lösung dieser Aufgabe ist bei einer elektrischen Rotationsmaschine mit auf einem Rotor platzierten Permanentmagneten und auf einem Stator platzierten Stator-Spulen, bei der die Permanentmagnete auf einer inneren zylindrischen Oberfläche eines einen Teil des Rotors bildenden ringförmigen Trägers angeordnet sind und die Stator-Spulen auf Ringsegmenten aus magnetisch weichem Material, die zugleich den Spulenkern bilden, mit geringerem Radius konzentrisch zum Träger so angeordnet sind, dass der Rotor reibungsfrei um den Stator umlaufen kann, vorgesehen, dass die voneinander beabstandeten Stator-Ringsegmente durch Abstimmung der Anzahl und Anordnung der Permanentmagnete auf die Anzahl und Anordnung der Spulen bei Betrieb im Bereich ihrer Pole magnetisch und elektrisch neutral gehalten werden.

Es wurde gefunden, dass insbesondere folgende Bedingungen die Bildung ungewünschter inhomogener Magnetfelder und parasitärer Kräfte ausschließen und die Ringsegmente, die zugleich die Spulenkerne der Statorspulen bilden bei Betrieb magnetisch und elektrisch neutral halten, so dass im Bereich der Pole bzw. Enden der Ringsegmente der magnetische Fluss H = 0 ist:

a) die Anzahl der Permanentmagneten ist geradzahlig und hängt mit der Anzahl der Stator-Ringsegmente unter folgenden Bedingungen zusammen:

b) die Anzahl der Stator-Ringsegmente $R_s$ ist eine mit der Zahl der Permanentmagnete nicht teilbare Zahl und $R_s$ +1 sowie $R_s$ -1 sind ebenfalls mit der Zahl der Permanentmagnete unteilbar,

c) $R_s$ + 2 und $R_s$ - 2 sind mit der Anzahl der Permanentmagneten teilbar,

d) die Anzahl der Stator-Spulen pro Ringsegment ist gleich 2mal der Anzahl der Motorphasen oder ein Vielfaches von 2mal der Anzahl der Motorphasen,

e) jede Motorphase muss am Segment durch dieselbe Zahl der Spulen vertreten werden,

f) die Lage der Spulen erfüllt folgende Winkelbedingung:

$$\text{Anordnungswinkel der Spule der i-ten Phase} = (360/\text{Zahl der Permanent-}$$
$$\text{magnete}) \times (\text{Zählnummer des Permanentmagneten} + (i-1)/n_{\text{Motorphasen}}),$$

mit $i$ = ganze Zahl im Intervall 1 bis $n_{\text{Motorphasen}}$; $n_{\text{Motorphasen}}$ = Anzahl der Motorphasen, Zählnummer des Permanentmagneten = ganze Zahl in Intervall von 1 bis zur Gesamtzahl der Permanentmagneten im Motor.

Die elektrische Rotationsmaschine nach der Erfindung nutzt das Prinzip der Coulombkräfte aus. Die Anordnung der Elemente des Rotors und des Stators eliminiert auch bei hohen Momenten den für die klassischen Schrittmotoren typischen Flip-Flop-Effekt.

Der Rotor umfasst generell einen innerhalb der im Ganzen scheibenförmigen Rotationsmaschine in der Regel am äußeren Umfang liegenden ringförmigen Träger, auf dessen innerer zylindrischen Oberfläche Permanentmagnete gleichmäßig oder periodisch verteilt sind. Die Stator-Spulen, die die Motorpole bilden, sind auf Ringsegmenten in Form von Kreissegmenten aus magnetisch weichem Material platziert, die einfach und billig erzeugbar sind. Flip-Flop-Effekte würden entstehen, wenn die diskreten magnetisch leitenden Elemente im Motor, nämlich die Permanentmagnete hoher Remanenz, die Koinzidenzbeziehungen durch die spezielle Anordnung gemäß der Erfindung nicht erfüllen. Die Flip-Flop-Effekte beruhen auf Überschlägen der Magnete laut der Raumdichte des durch die Form der Permanentmagnete des Rotors und durch die geometrische Anordnung der magnetisch leitenden Segmente gebildeten magnetischen Flusses zusammen mit der Resultante der Summe der Intensität des magnetischen Feldes H der Spulen an den Polen der Segmente in jeder Position des Rotors gegenüber dem Stator.

Das Wesen der Erfindung liegt in der komplexen Konstruktionsanordnung der aktiven Teile der Rotationsmaschine, d.h. der Anzahl und Platzierungen der Magnete des Rotors, der Segmente aus dem magnetisch leitenden Material des Stators (Ringsegmente) und der Statorspulen, die die Motorpole bilden, wodurch sichergestellt wird, dass Kräfte und Magnetfelder sich so gegeneinander aufheben (neutral sind),dass keine Vibrationen entstehen können.

Um die Bedingungen zu erfüllen ist es erforderlich, dass die Außenzylinderfläche der Statorsegmente aus dem magnetisch weichen Material dieselbe Entfernung von der Oberfläche jedes permanenten Magneten in jeder Rotorlage hat, was durch die Bedingung der reibungsfrei ineinander beweglichen Ringe erfüllt wird.

Jede Motorphase muss an einem Segment durch dieselbe Zahl Spulen = Pole der Motorphase vertreten werden.

Vorzugsweise ist der ringförmige Rotor-Träger zwischen zwei um eine Nabe frei drehbaren Rotorscheiben angeordnet, und zwar nahe des (deren) äußeren Umfangs.

In einem bevorzugten Ausführungsbeispiel ist der ringförmige Rotor-Träger über eine Radfelge mit den Rotorscheiben verbunden.

Die Stator-Ringsegmente aus dem magnetisch weichen Material sind durch nicht magnetische, am Stator befestigte Halter voneinander beabstandet. Diese Halter können an einer Nabe befestigte Stator-Streben bilden oder durch an einer Nabe befestigte Stator-Streben oder Statorscheiben in jeweils gleichem Abstand von der Nabenachse gehaltert werden.

Im Folgenden wird die Erfindung anhand eines in den Figuren gezeigten Ausführungsbeispiels näher beschrieben. Es zeigt:

Fig. 1: eine Teil-Schnittansicht der Rotationsmaschine von der Seite, wobei die Schnittachse durch die Rotationsachse führt;

Fig. 2: eine schematische Schnittansicht senkrecht zur Rotationsachse durch die Spulen und Magnete zur Verdeutlichung der Entstehung der parasitären Kräfte $F_{Fe}$;

Fig. 3: eine schematische Schnittansicht wie in Fig. 2 zur Verdeutlichung der Bedingungen für die Eliminierung der parasitären Kräfte, die durch das nicht eliminierte Gesamtmagnetfeld der Spulen entstehen könnten.

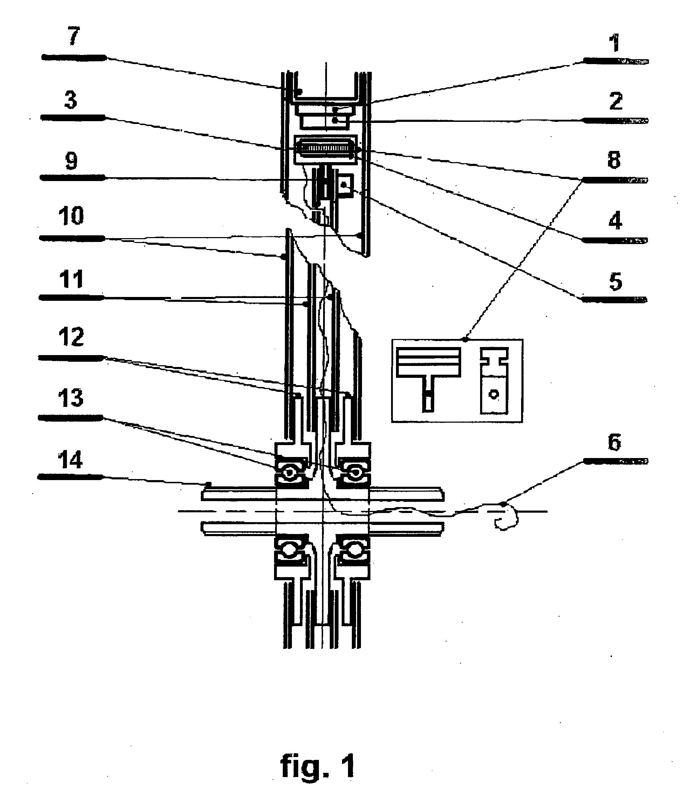

Die elektrische Rotationsmaschine nach der Erfindung, wie in Fig. 1 gezeigt, besteht aus einem Stator und einem Rotor. Die Tragekonstruktion des Rotors besteht aus zwei Rotorscheiben 10, hergestellt aus einem leichten elastischen Material, z.B. aus Dural. Beide Rotorscheiben 10 sind am Außenumfang durch eine Radfelge 7 mechanisch verbunden. Die Radfelge 7 dient zur Bildung der Schrank- oder Sandwichanordnung des Rotors. Die Radfelge 7 dient, bei Verwendung der Rotationsmaschine für den Antrieb eines Rades, z.B. eines Rollstuhlrades, zur Montage eines Reifens. Zur zylindrischen Innenseite der Radfelge 7 schließt sich ein Träger 1 für Permanentmagnete 2 an, bestehend aus einem magnetisch leitenden Material. Der Träger 1 der Permanentmagnete 2 hat die Form eines Kreisrings. An seiner zylindrischen Innenfläche sind die Permanentmagnete 2 mit einer hohen remanenten Induktion in gleichmäßigem Abstand befestigt. Der Rotor ist mit dem Stator durch Kugellager 13 mechanisch verbunden und gegenüber einer Nabe 14 frei drehbar. Die Kugellager 13 sind in Lagerbuchsen 12 platziert. Die Lagerbuchsen 12 sind mit den Rotorscheiben 10 mechanisch starr verbunden. Die Kugellager 13 sind auf der Befestigungsnabe 14 angepresst, die ein Bestandteil des Stators ist. An der Befestigungsnabe 14 ist eine Statorscheibe 11 befestigt. Die Statorscheibe 11 besteht in der leichten Sandwichausführung aus zwei Teilen. Am Umfang der Statorscheibe 11 sind Streben bzw. Halter 8 zur Befestigung der Ringsegmente 3 befestigt. Die Streben 8 zur Befestigung der Segmente 3 bestehen aus einem nicht magnetischen Material. Die Segmente 3 aus dem magnetisch weichen Material sind am Umfang in Rillen der Streben 8 eingefügt. An den unteren Teil der Strebe 8 schließt sich jeweils ein Schaft 9 an. Mit Hilfe der Schäfte 9 werden die Streben oder Halter 8 zur Befestigung der Segmente 3 an der Statorscheibe 11 festgemacht. Die Segmente 3 bestehen aus einem magnetisch weichen Maerial, z.B. aus Transformatorblechen. An den Ringsegmenten 3 der magnetischen Abschirmung sind Stator-Spulen 4 befestigt. Die aktiven Teile der Spulen 4 befinden sich in dem spaltförmigen Raum zwischen den Frontseiten der Permanentmagnete 2 und der Außenoberfläche der Ringsegmente 3 der magnetischen Abschirmung. Dies bedeutet, dass die aktiven Teile der Spulen 4 sich in einem Raum befinden, durch den der magnetische Fluss der Permanentmagnete 2 läuft. Die Abstände zwischen Permanentmagneten und Statorsegmenten sind in jeder beliebigen Lage des Rotors gegenüber dem Stator gleich. Die Statorpole werden durch die aktiven Teile der Spulen 4 in dem Spaltraum gebildet.

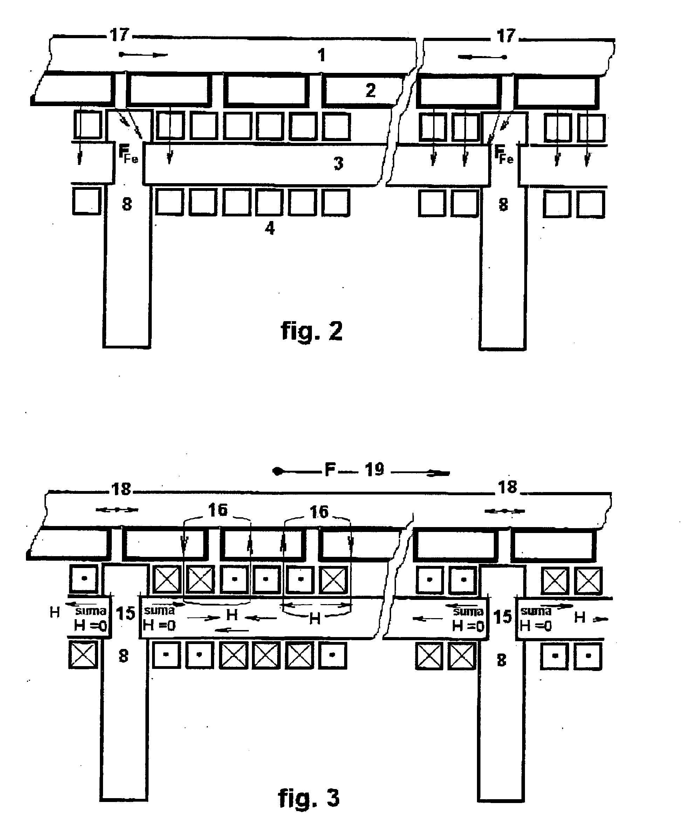

Die Anzahl der Spulen 4 unter einem permanenten Magneten 2 gibt die Anzahl der Motorphasen an. Die gegenseitige Lage jeder Spule 4 gegenüber dem darüber befindlichen? Permanentmagneten 2 wird durch den Lagesensor 5 verfolgt. Die Spulen 4 werden durch die Einlaufleiter 6 elektrisch gespeist, die durch die hohle Nabe 14 laufen. Alle Spulen sind seriell verbunden. Der Lagesensor 5, vorzugsweise ein HALL-Sensor, steuert die Beaufschlagung der Spulen mit Speisespannung unter Kompensation parasitärer Kräfte in allen Phasen (Modi) der Motorsteuerung. Die relative Lage der aktiven Teile der Rotationsmaschine, d.h. des Trägers 1, der Permanentmagnete, der Ringsegmente 3 der magnetischen Abschirmung mit den Haltern 8 und der Spulen 4 zueinander wird durch Figuren 2 und 3 verdeutlicht.

Figur 2 erklärt die Entstehung der parasitären Kräfte $F_{Fe}$ mit der Resultante 17, die durch die Permanentmagnete 2 und durch die Konstruktion der Segmente aus dem magnetisch weichen Material 3 verursacht werden, wobei das Wesen der Eliminierung dieser Kräfte in Figur 3 veranschaulicht wird.

Durch die Erfüllung der folgenden Bedingungen:

1) die Anzahl der Permanentmagneten 2 am Rotor muss eine gerade Zahl sein;

2) die Anzahl der Stator-Ringsegmente 3 aus dem magnetisch weichen Material muss eine durch 1) nicht teilbare Zahl sein, unter der Bedingung, dass die nächst höhere und die nächst niedrigere Zahl auch eine mit der Zahl der Permanentmagneten 2 des Rotors nicht teilbare Zahl ist und dass beide um zwei höhere und um zwei niedrigere Zahlen mit der Zahl der Permanentmagnete 2 teilbar sind

kommt es zur Kompensation der resultierenden Kraft 17 durch die Art der Anordnung der Komponenten, wie beschrieben und in Figuren 2 und 3 (schematisch, in gestreckter Form) dargestellt.

Durch die Streben 8, die die Ringsegmente 3 haltern und beabstanden, bildet sich dort ein nicht homogenes Magnetfeld 16, das die radialen Kräfte $F_{Fe}$ mit der Resultante 17 mit variabler Größe, abhängig von der gegenseitigen Lage des Stators und des Rotors, erzeugt. Der Kraftverlauf ist von der gegenseitigen Lage des Magnets und der Achse der Streben 8 mit den in die Ausnehmungen eingefügten Segmenten 3 abhängig. Bei variablem Winkel der Achse einer Strebe 8 im Raum bekommt die Kraft 17 positive Werte vom Anfang bis zur Mitte des überstrichenen Magneten und negative Werte von der Mitte bis zum Ende des Magneten, unabhängig von der Polarität des Magneten.

Figur 3

Figur zeigt denselben Ausschnitt des Ausführungsbeispiels wie in Figur 2 in entsprechender schematischer Darstellung. Anhand dieser Abbildung werden

1) die Wirkungen, durch welche die Nutzkraft F19 entsteht,

2) die Nullstellung des Gesamtmagnetfelds der Spulen des Statorsegments und dadurch die Eliminierung von Störkräften

veranschaulicht.

Die Quelle des magnetischen Flusses sind die Permanentmagneten 2, verteilt auf der ganzen zylindrischen Innenfläche des Trägers 1. Der Träger 1 schließt den magnetischen Kreis der Permanentmagnete 2, der durch den Luftspalt zwischen Permanentmagneten und zylindrischer Außenfläche des Ringsegments 3 gebildet wird. Der Hauptteil des magnetischen Flusses 16 erzeugt in der Luftspalte zwischen Permanentmagneten 2 und Spulen 4 die magnetische Induktion, wobei der Kreis über Träger 1 und Ringsegment 3 (in Figuren 2 und 3 gestreckt dargestellt) geschlossen wird. Der Dispersionsteil des magnetischen Flusses schließt an der Innenseite des Ringsegments 3 und an der Außenseite des Trägers1 ab.

Nach dem Anschluss der Speisespannung durch den Leiter 6 beginnt durch die Spulen 4 elektrischer Strom zu fließen. In der Abbildung ist die Stromrichtung durch Kreuze (eine Stromrichtung) und Punkte (Gegenrichtung) verdeutlicht. Der magnetische Fluss 16 bildet in Koinzidenz mit der Größe und der Richtung des Stroms in der Wicklung der Spulen 4, die in dem Luftspalt sind, die gewünschte Kraft F 19. Die Kraft 19 ist die Aktionskraft, die über die Radfelge 7 auf den Umfang des Rades übertragen wird, und dadurch einen beispielsweise mit zwei Rädern nach diesem Ausführungsbeispiel ausgerüsteten Rollstuhl antreiben.

Damit in der Kraft 19 ein flip-flop Effekt eliminiert wird, ist gleichzeitig die Bedingung zu erfüllen, dass die Pole der Segmente 3 magnetisch neutral sind, d. h. dass die resultierende Intensität des Magnetfelds H und der einzelnen Spulen 4 jedes Segments 3 die Bedingung H = 0 erfüllen muss, wie in Figur 3 dargestellt. Hierdurch sind die Pole 15 der Segmente 3 aus dem magnetisch weichen Material an der Stelle der Halterung durch die Streben 8 magnetisch neutral, und es können keine parasitären Kräfte 18 durch die Koinzidenz des magnetischen Flusses 16 der Permanentmagneten 2 und des magnetischen Flusses der Segmente 3 entstehen. Die Bedingung H = 0 ist durch die Anzahl der Spulen jeden Segments zu erreichen.

Die einzelnen Spulen 4, die die Motorpole bilden, werden bei Einhaltung der beschriebenen Bedingungen unter Strom in Abhängigkeit von der Lage des Rotors gegenüber dem Stator so zusammenwirken, dass sie die Kraft 19 am Motorkreis bilden. Bei Einhaltung der für die Erfindung wesentlichen Bedingungen ist immer an jedem Ringsegment 3 eine gerade Anzahl der Spulen 4 derselben Motorphase unter Spannung, was sicherstellt, dass die Summe der Teilkomponenten der magnetischen Intensität H in jedem Zustand der Lage des Rotors relativ zum Stator die Bedingung der magnetischen Neutralität (Summe H = 0) erfüllt und dass keine parasitären Kräfte 18 zwischen den Polen 15 der Statorsegmente 3 und den Permanentmagneten 2 des Rotors entstehen, und der Motor auch bei niedrigen Drehzahlen und hohen Anzugsmomenten reibungslos läuft.

Durch diese Prinzipien ist eine leichte getriebefreie Konstruktion unter sicherer Ausschaltung von Flip-Flop-Effekten auch bei einem Rotordurchmesser über 300 mm mm und sogar über 500 mm bei einer Rotorbreite von mehreren cm mit Anzugsmomenten in der Größenordnung von 100 Nm möglich. Beispielsweise würde eine Rotationsmaschine nach klassischer Ausführung für eine Leistung von etwa 1 kW mit Ausgangsdrehzahlen um 40 U/min bei einem Druchmesser von 20 cm schon ca. 36 kg wiegen, während bei einer Ausführung nach der Erfindung entsprechend der vorstehenden Beschreibung Durchmesser von 50 cm bei einem Gewicht von nur 12 kg ohne weiteres zu realisieren sind.

Die getriebelose Rotationsmaschine nach der Erfindung benötigt keine Verschleißteile (Bürsten, Öle) und ist daher wartungsfrei oder zumindest extrem wartungsarm. Die Betriebskosten sind daher im Vergleich zu klassischen Motoren besonders günstig.

Im Folgenden wird ein Ausführungsbeispiel angegeben:

Für ein Rad mit 520 mm Durchmesser werden 48 Permanentmagnete gleichmäßig auf der Innenzylinderfläche des Rotors verteilt. Diesen 48 Magneten stehen 10 auf dem Stator angeordnete Ringsegmente gegenüber, wobei auf jedem Ringsegment 12 Spulen platziert sind. Die Ringsegmente werden aus Dynamoblech hergestellt, die Permanentmagnete aus FeNdB 42. Die Größe der Permamentmagnete ergibt sich bei der gewählten Radgröße und der Anzahl der Magnete zu 25 mm Länge (in Umfangsrichtung), 30 mm Breite und 5 mm Höhe (Radialrichtung). Bei vorgenannter Anordnung sind 48 dieser Magnete jeweils um 5 mm beabstandet, bezogen auf den ringförmigen Rotor-Träger. Die Ringsegmente sind 4 mm hoch (Radialrichtung), in Abstimmung auf die Magnete 30 mm breit und 138 mm lang. Der Zwischenraum zwischen diesen Segmenten in Umfangsrichtung wird durch die Halter überbrückt. Auf jedes Ringsegment sind 12 Spulen gewickelt, 3 in Zuordnung zu je einem Magneten. Der Spulendraht ist Kupferdraht von 0,72 mm Dicke, pro Spule 44 Windungen. Der Luftspalt zwischen den Ringsegmenten und der zylindrischen Innenfläche des Rotorträgers ist 4 mm breit.

In dem gegebenen Beispiel wurden folgende technische Daten realisiert:

Moment M = 120 Nm, Maximalgeschwindigkeit bei einer Speisespannung von 36 V = 6 km/h, Gewicht G = 12 Kg, Leistung W = 1,25 kW, Antriebskraft am Umfang 500 N.

Die Erfindung umfasst weiterhin die Verwendung der elektrischen Rotationsmaschine als Motor und als Generator.

Bei der Verwendung als Motor ist die Erfindung besonders nützlich für den Direktantrieb von Fahrzeugen, speziell langsam laufenden Kleinfahrzeugen, z. B.: leichten Rollstühlen (auch in klappbarer Ausführung), City-Rollern (scootern), Minicars, beispielsweise für Innenstädte, Einkaufszentren oder Messegelände, Kinderfahrzeuge, Karussells, und viele andere mehr.

Bei der Verwendung als Generator ist besonders die Umwandlung von Windkraft in Windrädem oder von Wasserkraft in Turbinen hervorzuheben. Da die Rotorscheiben, Statorscheiben und Streben nicht wie oben beschrieben flächig ausgebildet sein müssen, können beispielsweise die Halter für die Ringsegmente auch flügelförmig sein. Rotor und Stator können dabei in vertauschter Funktion eingesetzt werden.

Selbst wenn in der Beschreibung und den Ansprüchen durchgehend von "Rotor" die Rede ist, wenn die ringförmige Anordnung der Permanentmagnete angesprochen wird, und von "Stator", wenn die ringförmige Anordnung der Spulen/Ringsegmente aus magnetisch weichem Material beschrieben wird, ist es jedem Fachmann klar, dass die treibenden Kräfte reziprok sind (actio gleich reactio). Es sind daher ebenso Motoren oder Generatoren verwirklichbar, bei denen die Permanentmagnete auf dem Stator angeordnet sind und die Spulen auf dem Rotor. Dies stellt allerdings insoweit eine weniger bevorzugte Ausführungsform dar, als die elektrische Zuleitung zu den Spulen als Schleifkontakt ausgebildet sein müsste. Die Bezeichnungen "Rotor" und "Stator" sind als vertauschbar anzusehen, da es keinen übergeordneten Begriff gibt.

Die Erfindung umfasst weiterhin ein Rad mit integriertem Elektroantrieb in Form einer erfindungsgemäßen elektrischen Rotationsmaschine. Einzelne oder mehrere dieser Räder können für die verschiedensten Zweck und bei den verschiedensten Fahrzeugen eingesetzt werden.

Bezugszeichenliste

1 Träger (für Permanentmagneten), = Rotortell
2 Permanentmagneten (auf Rotor angeordnet, mit hoher remanenter Induktion)
3 Stator-Ringsegmente aus magnetisch weichem Material
4 Stator-Spulen
5 Lagesensor (zur Lagebestimmung (4) gegen (2))
6 Einlaufleiter (el. Spulenzuleitung, Zuführung der Speisespannung)
7 Befestigungsring (=Radfelge, Verbindung der Rotorscheiben 1)
8 Halter ("Strahlen" bzw. Streben) aus nicht-megnetischem Material zur Befestigung der Ringsegmente 3
9 Schaft
10 Rotorscheiben
11 Statorscheiben
12 Lagerbuchsen, mechanisch mit Rotorscheiben verbunden
13 Kugellager-Verbindung Rotor/Stator
14 Befestigungsnabe (= Radnabe)
15 Pole der Statorsegmente
16 magnetischer Fluss
17 Resultante der Kräfte $F_{Fe}$
18 parasitäre Kräfte (zu Vibrationen führend)
19 F (Aktionskraft, resultierende Antriebskraft des Motors)

**Patentansprüche**

**1.** Elektrische Rotationsmaschine mit auf einem Rotor (1; 7; 10) platzierten Permanentmagneten (2) und auf einem Stator (3; 8; 11) platzierten Stator-Spulen (4),
wobei die Permanentmagnete (2) auf einer inneren zylindrischen Oberfläche eines einen Teil des Rotors bildenden ringförmigen Trägers (1) angeordnet sind und die Stator-Spulen (4) auf Ringsegmenten aus magnetisch weichem Material (3) mit geringerem Radius konzentrisch zum Träger (1), die zugleich den Spulenkern bilden, so angeordnet sind, dass der Rotor reibungsfrei um den Stator umlaufen kann, **dadurch gekennzeichnet, dass** die voneinander beabstandeten Stator-Ringsegmente (3) durch Abstimmung der Anzahl und Anordnung der Permanentmagnete (2) auf die Anzahl und Anordnung der Spulen (4) bei Betrieb im Bereich ihrer Pole (15) magnetisch und elektrisch neutral gehalten werden.

**2.** Elektrische Rotationsmaschine nach Anspruch 1, **dadurch gekennzeichnet, dass** die voneinander beabstandeten Stator-ingsegmente (3) durch folgende Bedingungen bei Betrieb magnetisch und elektrisch neutral gehalten werden:

a) die Anzahl der Permanentmagneten (2) ist geradzahlig,
b) die Anzahl der Stator-Ringsegmente (3) $R_s$ ist eine mit der Zahl der Permanentmagnete (2) nicht teilbare Zahl und $R_s$ +1 sowie $R_s$ -1 sind ebenfalls mit der Zahl der Permanentmagnete nicht teilbar,
c) $R_s$ + 2 und $R_s$ - 2 sind mit der Anzahl der Permanentmagneten (2) teilbar,
d) die Anzahl der Stator-Spulen (4) pro Ringsegment (3) ist gleich 2mal der Anzahl der Motorphasen oder ein Vielfaches von 2mal der Anzahl der Motorphasen,
e) jede Motorphase muss am Segment (3) durch dieselbe Zahl der Spulen (4) vertreten sein,
f) die Lage der Spulen (4) erfüllt folgende Winkelbedingung:

$$\text{Anordnungswinkel der Spule der i-ten Phase} = (360/\text{Zahl der Pemanent-magnete}) \times (\text{Zählnummer des Magnets} + (i-1)/n_{\text{Motorphasen}}),$$

mit $i$ = ganze Zahl im Intervall von 1 bis $n_{\text{Motorphasen}}$; $n_{\text{Motorphasen}}$ = Anzahl der Motorphasen; Zählnummer des Magnets = ganze Zahl im Intervall von 1 bis zur Gesamtzahl der Permanentmagnete.

3.  Elektrische Rotationsmaschine nach Anspruch 1 oder 2, **dadurch gekennzeichnet, dass** der ringförmige Rotor-Träger (1) zwischen zwei um eine Nabe frei drehbaren Rotorscheiben (10) angeordnet ist, vorzugsweise nahe des äußeren Umfangs.

4.  Elektrische Rotationsmaschine nach einem der Ansprüche 1 bis 3, **dadurch gekennzeichnet, dass** der ringförmige Rotor-Träger (1) über eine Radfelge (7) mit den Rotorscheiben (10) verbunden ist.

5.  Elektrische Rotationsmaschine nach einem der Ansprüche 1 bis 4, **dadurch gekennzeichnet, dass** die Ringsegmente (3) durch nicht magnetische, am Stator befestigte Halter (8) voneinander beabstandet sind.

6.  Elektrische Rotationsmaschine nach Anspruch 5, **dadurch gekennzeichnet, dass** die Halter an einer Nabe befestigte Stator-Streben bilden oder durch an einer Nabe befestigte Stator-Streben oder Statorscheiben (11) in jeweils gleichem Abstand von der Nabenachse gehaltert werden.

7.  Elektrische Rotationsmaschine nach einem der Ansprüche 1 bis 6 in Form eines Motors.

8.  Elektrischen Rotationsmaschine nach einem der Ansprüche 1 bis 6 in Form eines Generator, insbesondere innerhalb eines Windrades oder einer Turbine.

9.  Rad mit integriertem Elektroantrieb in Form der Rotationsmaschine nach einem der Ansprüche 1 bis 6.

10. Fahrzeug, insbesondere Rollstuhl, mit wenigstens zwei Rädern gemäß Anspruch 9.

fig. 1

**fig. 2**

**fig. 3**